# EUROPEAN PATENT APPLICATION

(11) **EP 1 541 903 A1**
(43) Date of publication of application: **15.06.2005**
(21) Application number: 04029241.9
(22) Date of filing: 09.12.2004
(51) Int. Cl.: F16H 61/24, F16H 59/02

(54) **Gear shift apparatus**

(30) Priority: 11.12.2003 JP 2003413511
(71) Applicant: ALPS ELECTRIC CO., LTD., Tokyo 145-8501 (JP)
(72) Inventor: Onodera, Mikio, Ota-ku Tokyo 145-8501 (JP)
(74) Representative: Klunker . Schmitt-Nilson . Hirsch

(57) **Abstract**

There is provided a combined By-wire and Tiptronic type gear shift apparatus capable of improving the operability of a shift lever and thereby accomplishing the practicability of the apparatus. The gear shift apparatus comprises a shift lever guide 1, a fixed shaft 2, a rotary cylinder 3, a shift lever 6 movable in a rotating direction of the rotary cylinder 3 and a direction perpendicular to the rotating direction, a solenoid 8 and an actuator 13 for rotating the shift lever 6, first and second position detection sensors 10 and 14 for detecting a shift position of the shift lever 6, a rack 11 secured to the shift lever 6, a pinion 12 secured to a driving shaft 13a of the actuator 13, and a controller 18 for controlling operation of the solenoid 8 and the actuator 13.

## Description

### BACKGROUND OF THE INVENTION

### 1. Field of the Invention

The present invention relates to a gear shift apparatus, and more particularly, to a combined By-wire and Tiptronic type gear shift apparatus which is constructed to allow a shift lever to be operated along a drive lane and a Tiptronic lane defined in a shift lever guide.

### 2. Description of the Related Art

Conventionally, in a vehicle, as a gear shift apparatus for connecting a transmission and a shift lever with each other, a mechanical link mechanism has been commonly used. Recently, in order to save the manufacturing cost, reduce occupying space, decrease the size and improve the operability of a shift lever, and to raise the degree of freedom in locating component elements inside a vehicle, a By-wire type gear shift apparatus has been disclosed in the art, in which a transmission and a shift lever are connected to each other using an electric circuit. As another method for improving the operability of the shift lever, a Tiptronic type gear shift apparatus has been also disclosed in the art, in which a gear shift in a transmission is performed by manipulating a switch provided on, for example, a steering wheel (see Japanese Unexamined Patent Application Publication No. 2003-287112).

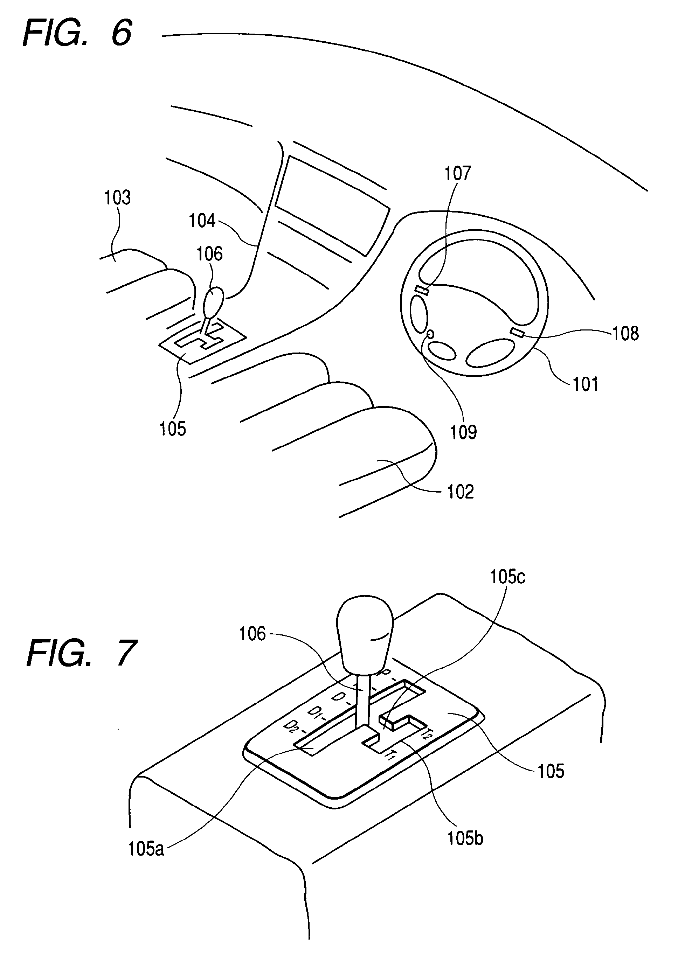

FIGS. 6 and 7 illustrate a conventional By-wire and Tiptronic type gear shift apparatus which is obtained by combining a By-wire type and a Tiptronic type gear shift apparatuses. FIG. 6 is a perspective view illustrating a principle part inside a vehicle, and FIG. 7 is an enlarged perspective view illustrating a shift lever guide section inside a vehicle.

In FIG. 6, the reference numeral 101 indicates a steering wheel, 102 indicates a driver's seat, 103 indicates a front passenger's seat, 104 indicates a console box provided between the driver's seat 102 and the front passenger's seat 103, 105 indicates a shift lever guide installed on the console box 104, 106 indicates a shift lever operated in the shift lever guide 105, 107 indicates a shift-up switch provided to a left side the steering wheel 101 on a rear side thereof, 108 indicates a shift-down switch provided to a right side of the steering wheel 101 on the rear side thereof, and 109 indicates a Tiptronic mode selection switch provided to a lower side of the steering wheel 101 on the rear side thereof.

As it can be readily seen from FIG. 7, the shift lever guide 105 is defined with a drive lane 105a in which desired shift positions P, R, D, D1 and D2 are appropriately arranged, a Tiptronic lane 105b which has a shift-up position T1 and a shift-down position T2, and a conversion lane 105c which connects the drive lane 105a and the Tiptronic lane 105b with each other. The shift lever 106 can be operated only along these three lanes. The reference numeral P indicates a parking position, R indicates a reverse position, D indicates a drive position, D1 indicates a third position, and D2 indicates a second position.

In the gear shift apparatus constructed as mentioned above, by introducing the shift lever 106 into the drive lane 105a and placing the shift lever 106 at any desired shift position, it is possible to shift the transmission to the desired shift position. Also, by introducing the shift lever 106 into the Tiptronic lane 105b after passing through the conversion lane 105c and placing the shift lever 106 at the T1 position or the T2 position, it is possible to shift up or shift down the transmission. In a state in which the shift lever 106 is introduced into the Tiptronic lane 105b, since it is possible to manipulate the shift-up switch 107 and the shift-down switch 108, shift-up or shift-down of the transmission can be performed with hands placed on the steering wheel 101. Also, the switching of a drive mode to a Tiptronic mode or vice versa can be carried out by using the Tiptronic mode selection switch 109 which is provided on the steering wheel 101.

In order to improve the operability of the shift lever 106 and thus the practicability of the gear shift apparatus, it is necessary to provide a predetermined operation feeling to the shift lever 106 so that a driver can perceive through blind touch to which position the shift lever 106 is operated.

However, the conventional combined By-wire and Tiptronic type gear shift apparatus, constructed as mentioned above, does not have operation feeling providing means for providing a predetermined operation feeling to the shift lever 106 when the shift lever 106 is introduced into the drive lane 105a or into the Tiptronic lane 105b, there are limitations in improving the practicability of the gear shift apparatus.

### SUMMERY OF THE INVENTION

Accordingly, the present invention has been made to solve the above-mentioned problems, and an object of the present invention is to provide a combined By-wire and Tiptronic type gear shift apparatus which is constructed to improve the operability of a shift lever, thereby improving practicability of the device.

In order to achieve the above object, according to an aspect of the present invention, there is provided a gear shift apparatus comprising a shift lever guide having a first and second lanes which are substantially parallel to each other and communicates with each other by a bridging lane, a shift lever operated along the lanes of the shift lever guide, an actuator for applying an external force to the shift lever, at least one position sensor for detecting a shift position of the shift lever, a power transmitting mechanism for transmitting the external force generated by the actuator to the shift lever, and a controller for controlling operation of the actuator based on a detection signal output from the position sensor.

By the feature of the present invention, the gear shift apparatus comprises a position sensor for detecting a shift position of a shift lever, an actuator for applying an external force to the shift lever and a controller for controlling operation of the actuator. The controller controls operation of the actuator based on a detection signal output from the position sensor. Therefore, since it is possible to provide a predetermined operation feeling to the shift lever depending upon a shift position of the shift lever, a driver can perceive through blind touch where a current shift position is or from which shift position to which shift position gear shift operation is performed, whereby the operability of the shift lever can be improved. Also, when the shift lever is in both a drive lane and a Tiptronic lane, it is possible to provide a predetermined operation feeling to the shift lever, whereby the operability of the shift lever can be further improved. As a result, the practicability and reliability of the combined By-wire and Tiptronic type gear shift apparatus can be significantly improved.

According to another aspect of the present invention, the power transmitting mechanism comprises a rack and pinion mechanism which has a rack secured to the shift lever and a pinion secured to a driving shaft of the actuator, and gear teeth of the rack and pinion are formed such that the rack and pinion can slide in a direction parallel to the bridging lane.

By the feature of the present invention, a power transmitting mechanism for connecting the shift lever and a driving shaft of the actuator comprises a rack pinion mechanism which is composed of a combination of a rack secured to the shift lever and a pinion secured to the driving shaft of the actuator. Gear teeth of the rack and pinion are formed such that the rack and pinion can slide in a direction parallel to a bridging lane. Therefore, when the shift lever is in both the drive lane and the Tiptronic lane, by using only the rack pinion mechanism, it is possible to provide a predetermined operation feeling to the shift lever, whereby the construction of the power transmitting mechanism, that is, of the gear shift apparatus, can be simplified.

According to still another aspect of the present invention, the gear shift apparatus further comprises a switching unit for switching the controller to a drive mode or a Tiptronic mode; and a Tiptronic switch which is manipulated when the controller is switched to the Tiptronic mode to perform gear shift in a transmission.

By the feature of the present invention, the gear shift apparatus comprises a switching unit and a Tiptronic switch. Therefore, because it is possible to perform the gear shift of a transmission through the manipulation of the switches, the gear shifting operation in the transmission can be performed in a convenient manner, and thereby the safe driving of a vehicle can be ensured.

According to yet still another aspect of the present invention, the switching unit and the Tiptronic switch are provided on a steering wheel of a vehicle.

By the feature of the present invention, the switching unit and the Tiptronic switch are provided on a steering wheel of a vehicle. Therefore, as it is possible to manipulate the switching unit and the Tiptronic switch with hands placed on the steering wheel, the safe driving of a vehicle can be ensured, and the operability of the gear shift apparatus can be improved.

The gear shift apparatus according to the present invention provides advantages as described below. Since the gear shift apparatus comprises a position sensor for detecting a shift position of a shift lever, an actuator for applying an external force to the shift lever and a controller for controlling operation of the actuator, the controller controls operation of the actuator based on a detection signal output from the position sensor, it is possible to provide a predetermined operation feeling to the shift lever depending upon a shift position of the shift lever. Therefore, a driver can perceive through blind touch where a current shift position is or from which shift position to which shift position gear shift operation is performed, whereby the operability of the shift lever can be improved. Also, when the shift lever is in both a drive lane and a Tiptronic lane, it is possible to provide a predetermined operation feeling to the shift lever, whereby the operability of the shift lever can be further improved. As a result, the practicability and reliability of the combined By-wire and Tiptronic type gear shift apparatus can be significantly improved.

### BRIEF DESCRIPTION OF THE DRAWINGS

FIG. 1 is a constructional view illustrating a gear shift apparatus in accordance with an embodiment of the present invention;
FIG. 2 is a plan view of a shift lever guide;
FIG. 3 is a cross-sectional view taken along a line III-III of FIG. 1;
FIG. 4 is a cross-sectional view taken along a line IV-IV of FIG. 1;
FIGS. 5A and 5B are tables illustrating exemplary control table stored in a controller of the gear shift apparatus according to the present invention;
FIG. 6 is a perspective view illustrating a principle part inside a vehicle; and
FIG. 7 is an enlarged perspective view illustrating a shift lever guide section inside a vehicle.

### DESCRIPTION OF THE PREFERRED EMBODIMENT

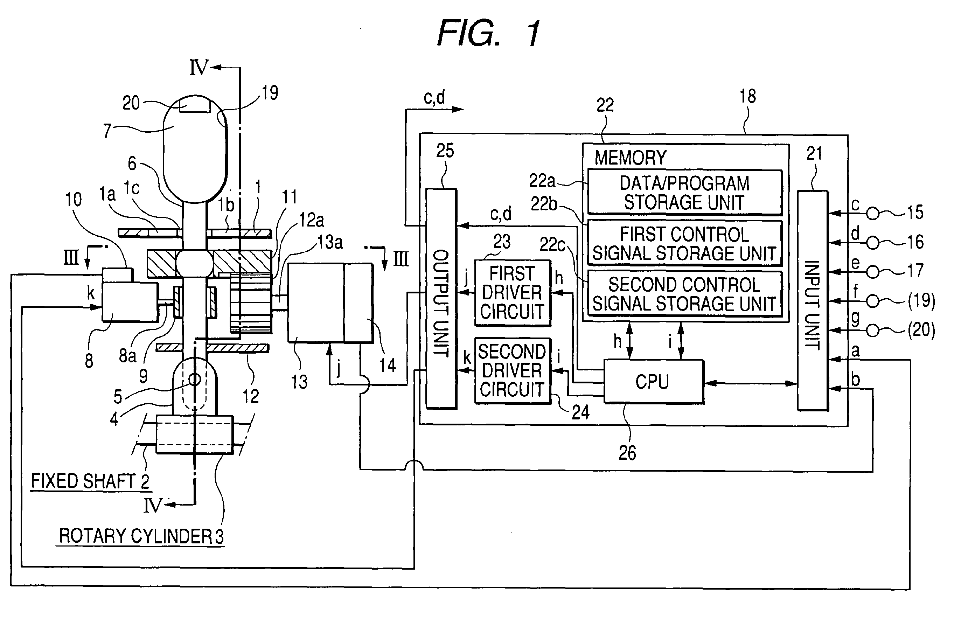

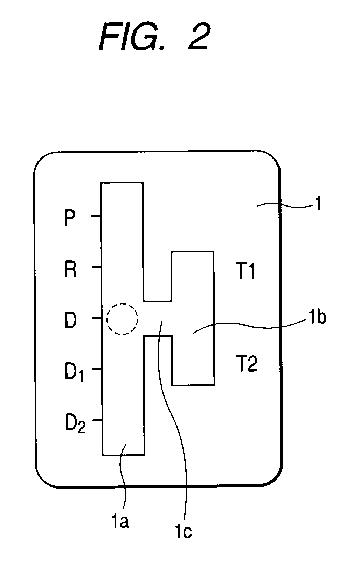

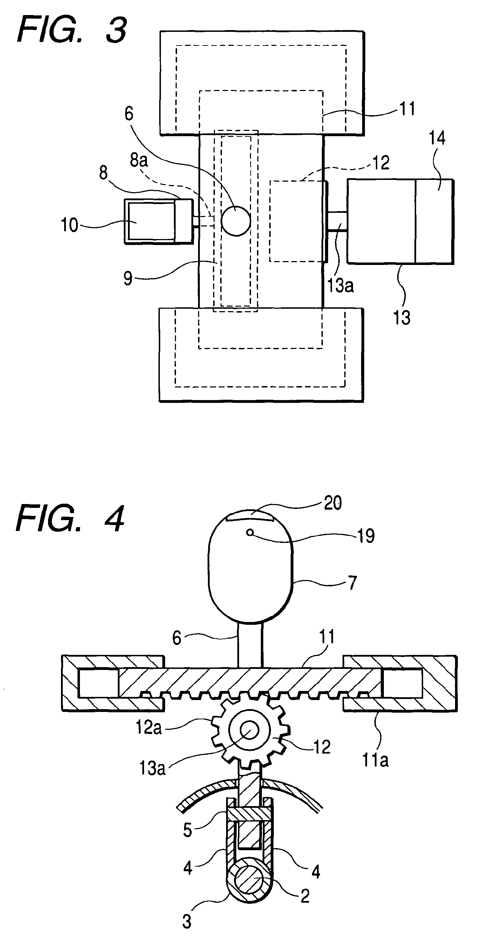

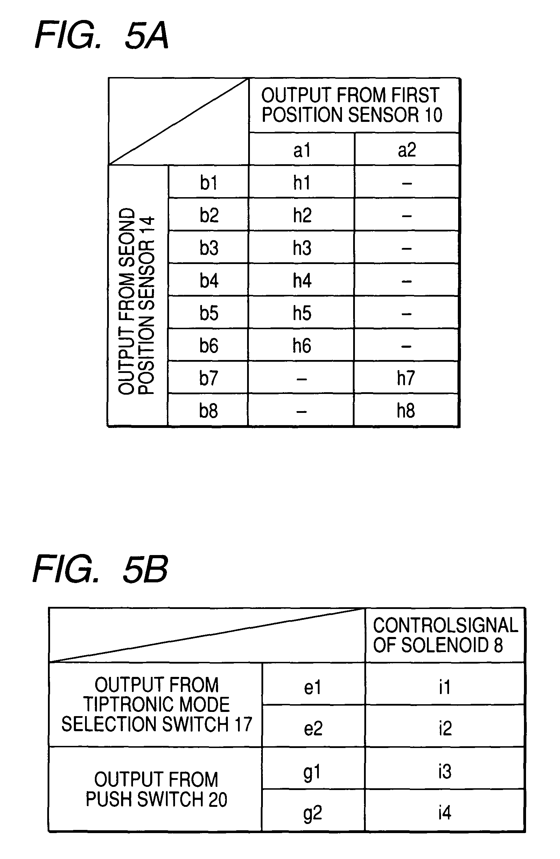

Hereinafter, a gear shift apparatus in accordance with an embodiment of the present invention will be described with reference to FIGS. 1 through 5. FIG. 1 is a constructional view illustrating a gear shift apparatus in accordance with an embodiment of the present invention; FIG. 2 is a plan view of a shift lever guide; FIG. 3 is a cross-sectional view taken along a line III-III of FIG. 1; FIG. 4 is a cross-sectional view taken along a line IV-IV of FIG. 1; and FIGS. 5A and 5B are tables illustrating exemplary control table stored in a controller of the gear shift apparatus according to the present invention.

Referring to FIG. 1, a gear shift apparatus in accordance with an embodiment of the present invention mainly comprises a shift lever guide 1, a fixed shaft 2 which is placed below the shift lever guide 1, a rotary cylinder 3 which is rotatably fitted around the fixed shaft 2, a bracket 4 which is secured to the rotary cylinder 3, a shift lever 6 which is coupled to the bracket 4 by a pin 5 to be pivoted in a rotating direction of the rotary cylinder 3 and in a direction perpendicular to the rotating direction of the rotary cylinder 3, a shift knob 7 which is mounted to an upper end of the shift lever 6, a solenoid 8 which pivots the shift knob 7 about the pin 5 in the direction perpendicular to the rotating direction of the rotary cylinder 3, a casing 9 for transmitting a driving force of the solenoid 8 to the shift lever 6, a first position sensor 10 for detecting a driving position of the solenoid 8, a rack 11 which is secured to the shift lever 6, a pinion 12 which is meshed with the rack 11, an actuator 13 for rotatably driving the pinion 12, a second position sensor 14 for detecting an rpm of the actuator 13, a shift-up switch 15, a shift-down switch 16, a Tiptronic mode selection switch 17, and a controller 18 for controlling operation of the solenoid 8 and the actuator 13.

As can be readily seen from FIG. 2, the shift lever guide 1 is defined with a drive lane 1a (a first lane), a Tiptronic lane 1b (a second lane), and a conversion lane 1c (bridging lane) which form an H-shaped configuration. Each of the lanes 1a, 1b and 1c is formed to have a width which is slightly greater than a diameter of the shift lever 6. The shift lever 6 can be operated only in a lengthwise direction of the respective lanes 1a, 1b and 1c. Referring to FIG. 2, since the characters have the same meanings as in the conventional shift lever guide shown in FIG. 7, descriptions thereof will be omitted herein.

The shift knob 7 is provided with a proximity sensor 19 and a push switch 20. When the hand of a driver approaches the shift knob 7, the proximity sensor 19 senses the hand and converts the entire system into an operating state. The push switch 20 functions to hold the shift lever 6 at an operated position.

While a conventional solenoid can be used as the solenoid 8, in order to save electric power, it is preferable to use a self-supporting type solenoid.

The casing 9 allows the shift lever 6 to be operated along the drive lane 1a and the Tiptronic lane 1b. The casing 9 functions to transmit a driving force of the solenoid 8 to the shift lever 6. In this preferred embodiment of the present invention, as shown in FIG. 3, the casing 9 is formed to have a length which is slightly greater than an operating range of the shift lever 6 operated along the drive lane 1a. The casing 9 is located to extend in a direction where the drive lane 1a and the Tiptronic lane 1b are arranged.

While any conventional position sensor may be used as the first position sensor 10, in order to easily detect a positional change of a driving shaft 8a of the solenoid 8 which is slidably operated, it is preferable to use a slide type rheostat or encoder. Also, while, any conventional position sensor may be used as the second position sensor 14, in order to easily detect a positional change of a driving shaft 13a of the actuator 13 which is rotatably operated, it is preferable to use a rotary type variable resistor or encoder.

As shown in FIG. 4, the rack 11 is formed in the shape of a plate when viewed in its longitudinal cross-section. The rack 11 is formed, on a lower surface thereof, with rack gear teeth 11a. Pinion gear teeth 12a which are meshed with the rack gear teeth 11a are formed on a circumferential outer surface of the pinion gear 12. The rack and pinion gear teeth 11a and 12a are formed to extend parallel to the conversion lane (bridging lane) 1c. The rack and pinion gear teeth 11a and 12a are meshed with each other such that the pinion 12 can be freely slid with respect to the rack 11 in a direction parallel to the conversion lane (bridging lane) 1c.

While any conventional actuator which is employed as a driving source can be used as the actuator 13, in consideration of easy controllability due to a small size, it is preferable to use a rotary motor.

The shift-up switch 15, the shift-down switch 16, and the Tiptronic mode selection switch 17 can be provided on a rear surface of steering wheel not shown.

Referring to FIG. 1, the controller 18 comprises an input section 21, a memory 22, a first driver circuit 23, a second driver circuit 24, an output unit 25, and a CPU 26. In the input section 21, there are inputted a first position signal 'a' which is output from the first position sensor 10, a second position signal 'b' which is output from the second position sensor 14, a first switch signal 'c' which is output from the shift-up switch 15, a second switch signal 'd' which is output from the shift-down switch 16, a third switch signal 'e' which is output from the Tiptronic mode selection switch 17, a fourth switch signal 'f' which is output from the proximity switch 19, and a fifth switch signal 'g' which is output from the push switch 20. In the memory 22, control signals 'h' for the actuator 13, which are associated with the first and second position signals 'a' and 'b', and control signals 'i' for the solenoid 8, which are associated with the third and fifth switch signals 'e' and 'g', are stored in the form of tables. The first driver circuit 23 generates a drive signal 'j' for the actuator 13, from the control signal 'h' read from the memory 22. The second driver circuit 24 generates a drive signal 'k' for the solenoid 8, from the control signal 'i' read from the memory 22. The output unit 25 functions to output the drive signals 'j' and 'k' and the switch signals 'c' and 'd'. The CPU 26 functions to control entire these component parts.

Referring to FIG. 1, the memory 22 includes a data and program storage part 22a, and first and second control signal storage parts 22b and 22c. Data and programs for analyzing the signals 'a' through 'g' inputted into the input section 21 and a program for operating the CPU 26 are stored in the data and program storage part 22a. As shown in FIG. 5A, the control signals 'h1' through 'h8' for the actuator 13, which are associated with the first switch signals 'a1' and 'a2' and the second switch signals 'b1' through 'b8', are stored in the first control signal storage part 22b. Also, as shown in FIG. 5B, the control signal 'i1' through 'i4' for the solenoid 8, which are associated with the third switch signals 'e1' and 'e2' and the fifth switch signals 'g1' and 'g2', are stored in the second control signal storage part 22c.

The first position signal 'a1' is a signal which is output from the first position sensor 10 when the shift lever 6 is positioned in the drive lane 1a of the shift lever guide 1, and the first position signal 'a2' is a signal which is output from the first position sensor 10 when the shift lever 6 is positioned in the Tiptronic lane 1b of the shift lever guide 1. The second position signals 'b1' through 'b8' are signals output from the second position sensor 14 when the shift lever 6 is positioned in the respective shift positions P, R, D, D1 and D2 in the drive lane 1a and the shift lever 6 is positioned in the respective shift positions T1 and T2 in the Tiptronic lane 1b. The third switch signal 'e1' is a signal which is output from the Tiptronic mode selection switch 17 when the Tiptronic mode selection switch 17 is turned on, and the third switch signal 'e2' is a signal which is output from the Tiptronic mode selection switch 17 when the Tiptronic mode selection switch 17 is turned off. Also, the fifth switch signal 'g1' is a signal which is output from the push switch 20 when the push switch 20 is turned on, and the fifth switch signal 'g2' is a signal which is output from the push switch 20 when the push switch 20 is turned off.

The CPU 26 is operated based on the operating program stored in the data and program storage part 22a of the memory 22. The CPU 26 analyzes the respective signals 'a' through 'g' which are inputted into the input section 21, based on the data and programs which are stored in the data and program storage part 22a, and then, in conformity with the analyzed signals, outputs the drive signals 'j' and 'k' or the switch signals 'c' and 'd'.

Each of the first and second driver circuits 23 and 24 comprises a D/A converter for D/A converting the control signal 'h' or 'i' output from the CPU 26 and a signal amplifier for amplifying the D/A converted signal. The first and second driver circuits 23 and 24 function to output the drive signals 'j' and 'k' through the output unit 25 to the actuator 13 and the solenoid 8.

Hereinafter, operation of the gear shift apparatus according to the present invention, constructed as mentioned above, will be described.

First, as a driver grasps the shift knob 7, the proximity switch 19 which is provided on the shift knob 7 senses this situation and converts the entire system into an operating state.

In a state in which the shift lever 6 is positioned in the drive lane 1a of the shift lever guide 1 when the driver grasps the shift knob 7 or the driver manipulates the shift knob 7 to introduce the shift lever 6 into the drive lane 1a of the shift lever guide 1, if the driver operates the shift lever 6 from one shift position of the shift positions P, R, D, D1 and D2 assigned to the drive lane 1a to another shift position, the shift lever 6 is rotated about an axis of the fixed shaft 2, and a rotating force of the shift lever 6 is transmitted to the second position sensor 14 through the rack 11 and the pinion 12, whereby a second position signal 'b1' to 'b6' which is associated with the corresponding shift position is output from the second position sensor 14. Also, the first position signal 'a1', which indicates that the shift lever 6 is in the drive lane 1a, is output from the first position sensor 10. The CPU 26 reads out a control signal 'h1' to 'h6' for the actuator 13, which is associated with the signals 'a1' and 'b1' to 'b6', from the first control signal storage part 22b of the memory 22. The control signal 'h1' to 'h6' is converted into the drive signal 'j' for the actuator 13, by the first driver circuit 23, and then output through the output unit 25. By this fact, the actuator 13 is driven, and a driving force of the actuator 13 is transmitted to the shift lever 6 through the pinion 12 and the rack 11, whereby a predetermined operation feeling is provided on the shift knob 7.

An operation feeling provided to the shift lever 6 is changed depending upon a shift position. For example, when gear shift is effected between the D position and the D1 position and between the D1 position and the D2 position, predetermined click feelings which are different from each other are provided to the shift lever 6, and, when gear shift is effected between the P position and the R position and between the R position and the D position, in order to ensure safe driving of the vehicle, resistant feelings for indicating that gear shift is prohibited are provided to the shift lever 6. The gear shift between the P position and the R position and between the R position and the D position is enabled only when the push switch 20 provided on the shift knob 7 is pressed, and thereby, predetermined operation feelings which are different from each other can be provided to the shift lever 6.

The first position signal 'a1' output from the first position sensor 10 and the second position signal 'b1' to 'b6' output from the second position sensor 14 are transmitted to a transmission controller not shown. By the transmission controller, a shift position of the transmission is shifted to a position which corresponds to the shift position of the shift lever 6 after being shifted.

Meanwhile, if the driver moves the shift lever 6 from the drive lane 1a to the Tiptronic lane 1b of the shift lever guide 1, the shift lever 6 is rotated about the pin 5, and a rotating force of the shift lever 6 is transmitted to the driving shaft 8a of the solenoid 8 through the casing 9, whereby the first position signal 'a2' indicating that the shift lever 6 is introduced into the Tiptronic lane 1b is output from the first position sensor 10. In this state, if the driver presses the push switch 20 provided on the shift knob 7, the control signal 'i3' for the solenoid 8, which is associated with the fifth switch signal 'g1', is read out from the second control signal storage part 22c of the memory 22, and the drive signal 'k' for the solenoid 8 is output through the output unit 25. By this fact, the driving shaft 8a of the solenoid 8 is extended out of the solenoid 8, and the shift lever 6 can be stably maintained in the Tiptronic lane 1b. After the shift lever 6 is introduced into the Tiptronic lane 1b, if the driver operates the shift lever 6 to the position T1 or T2, the shift lever 6 is rotated about the axis of the fixed shaft 2, and a rotating force of the shift lever 6 is transmitted to the second position sensor 14 through the rack 11 and the pinion 12, whereby the second position signal 'b7' or 'b8', which corresponds to the shift position T1 or T2, is output from the second position sensor 14. The CPU 26 reads out a control signal 'h7' or 'h8' for the actuator 13, which is associated with the signals 'a2' and 'b7' or 'b8', from the first control signal storage part 22b of the memory 22. The control signal 'h7' or 'h8' is converted into the drive signal 'j' for the actuator 13, by the first driver circuit 23, and then output through the output unit 25. By this fact, the actuator 13 is driven, and a driving force of the actuator 13 is transmitted to the shift lever 6 through the pinion 12 and the rack 11, whereby a predetermined operation feeling is provided to the shift knob 7. After the shift lever 6 is operated to the shift position T1 or T2, if the driver removes the hand from the shift knob 7, this situation is sensed by the proximity switch 19 provided on the shift knob 7, and the actuator 13 is driven, whereby the shift lever 6 is returned to a center position in the Tiptronic lane 1b.

As the shift lever 6 is operated to the shift position T1 or T2, the first position signal 'a2' output from the first position sensor 10 and the second position signal 'b7' or 'b8' output from the second position sensor 14 are transmitted to the transmission controller not shown. By the transmission controller, the transmission is shifted up or down.

If the shift lever 6 is introduced into the Tiptronic lane 1b of the shift lever guide 1 by the driver and the push switch 20 provided on the shift knob 7 is pressed, or the Tiptronic mode selection switch 17 provided on the steering wheel is pressed by the driver, it is possible to shift up and down the transmission using the shift-up switch 15 and the shift-down switch 16. Also, introduction of the shift lever 6 from the drive lane 1a into the Tiptronic lane 1b is enabled only when the shift lever 6 is in the shift position D of the drive lane 1a. When the shift lever 6 is in the shift position D of the drive lane 1a, if the Tiptronic mode selection switch 17 is manipulated, the control signal 'i1' for the solenoid 8, which is associated with the third switch signal 'e1', is read out from the second control signal storage part 22c of the memory 22, and the drive signal k for the solenoid 8 is output through the output unit 25. By this fact, the driving shaft 8a of the solenoid 8 is protruded, and the shift lever 6 is stably maintained in the Tiptronic lane 1b.

After manipulating the Tiptronic mode selection switch 17, if the driver manipulates the shift-up switch 15 or the shift-sown switch 16, the first switch signal 'c' output from the shift-up switch 15 or the second switch signal 'd' output form the shift-down switch 16 is transmitted to the transmission controller not shown. By the transmission controller, the transmission is shifted up or down.

Conversion from a Tiptronic mode into a drive mode can be effected by turning off the Tiptronic mode selection switch 17 in a state in which the shift lever 6 is in the center position in the Tiptronic lane 1b. By turning off the Tiptronic mode selection switch 17, the control signal 'i2' for the solenoid 8, which is associated with the third switch signal 'e2', is read out from the second control signal storage part 22c of the memory 22, and the drive signal 'k' for the solenoid 8, which corresponds to the control signal 'i2', is output through the output unit 25. By this fact, the driving shaft 8a of the solenoid 8 is retracted, and the shift lever 6 is introduced from the Tiptronic lane 1b into the drive lane 1a by the casing 9.

As apparent from the above description, the gear shift apparatus according to the present invention comprises first and second position sensors 10 and 14 for detecting shift positions of a shift lever 6, an actuator 13 for applying an external force to the shift lever 6, and a controller 18 for controlling operation of the actuator 13. The controller 18 controls operation of the actuator 13 based on position signals 'a' and 'b' output from the first and second position sensors 10 and 14. Therefore, since it is possible to provide a predetermined operation feeling to the shift lever 6 depending upon a shift position of the shift lever 6, a driver can perceive through blind touch what a current shift position is or from what shift position to what shift position gear shift operation is performed, whereby operability of the shift lever 6 can be improved. Also, since the gear shift apparatus includes a rack 11 and a pinion 12 which transmits an external force generated by the actuator 13 to the shift lever 6 irrespective of a shift position of the shift lever 6, when the shift lever 6 is not only in a drive lane 1a but also in a Tiptronic lane 1b, it is possible to provide a predetermined operation feeling to the shift lever 6, whereby operability of the shift lever 6 can be further improved. As a result, practicability and reliability of the combined By-wire and Tiptronic type gear shift apparatus can be significantly improved.

Also, in the gear shift apparatus according to the present invention, a power transmitting mechanism for connecting the shift lever 6 and a driving shaft 13a of the actuator 13 comprises a rack pinion mechanism which is composed of a combination of the rack 11 secured to the shift lever 6 and the pinion 12 secured to the driving shaft 13a of the actuator 13. Therefore, when the shift lever 6 is not only in the drive lane 1a but also in the Tiptronic lane 1b, only by using a pair of the rack pinion mechanism, it is possible to provide a predetermined operation feeling to the shift lever 6, whereby a construction of the power transmitting mechanism, that is, of the gear shift apparatus, can be simplified.

Further, in the gear shift apparatus according to the present invention, a shift-up switch 15, a shift-down switch 16, and a Tiptronic mode selection switch 17 are provided. Therefore, because it is possible to perform gear shift of a transmission through manipulation of the switches, gear shifting operation in the transmission can be performed in a convenient manner, and thereby safe driving of a vehicle can be ensured.

Moreover, in the gear shift apparatus according to the present invention, the shift-up switch 15, the shift-down switch 16 and the Tiptronic mode selection switch 17 are provided on a steering wheel of a vehicle. Therefore, it is possible to manipulate the switches 15, 16 and 17 with the hands placed on the steering wheel, safe driving of a vehicle can be ensured, and operability of the gear shift apparatus can be improved.

While it was described in the above embodiment that the solenoid 8 and the casing 9 are employed as means for moving the shift lever 6 into the drive lane 1a or the Tiptronic lane 1b, a person having ordinary skill in the art will readily recognize that at least one spring capable of stably supporting the shift lever 6 in the drive lane 1a and the Tiptronic lane 1b may be used instead of the above configuration, on the basis of a supporting point pass principle.

## Claims

1. A gear shift apparatus comprising:
a shift lever guide having first and second lanes which are substantially parallel to each other and communicates with each other by a bridging lane;
a shift lever operated along the lanes of the shift lever guide;
an actuator for applying an external force to the shift lever;
at least one position sensor for detecting a shift position of the shift lever;
a power transmitting mechanism for transmitting the external force generated by the actuator to the shift lever; and
a controller for controlling operation of the actuator based on a detection signal output from the position sensor.

2. The gear shift apparatus according to claim 1,
wherein the power transmitting mechanism comprises a rack and pinion mechanism which has a rack secured to the shift lever and a pinion secured to a driving shaft of the actuator, and gear teeth of the rack and pinion are formed such that the rack and pinion can slide in a direction parallel to the bridging lane.

3. The gear shift apparatus according to claim 1 or 2, further comprising:
a switching means for switching the controller to a drive mode or a Tiptronic mode; and
a Tiptronic switch which is manipulated when the controller is converted into the Tiptronic mode to perform gear shift in a transmission.

4. The gear shift apparatus according to any of claims 1 to 3,
wherein the switching means and the Tiptronic switch are provided on a steering wheel of a vehicle.
